# EUROPÄISCHE PATENTSCHRIFT

(11) **EP 0 595 336 B1**
(45) Veröffentlichungstag und Bekanntmachung des Hinweises auf die Patenterteilung: **24.07.1996**
(21) Anmeldenummer: 93117535.0
(22) Anmeldetag: 29.10.1993
(51) Int. Cl.: B60H 1/26, F16L 37/248

(54) **Luftführungsgehäuse für Kraftfahrzeuge**
Air guide housing for motor vehicles
Boîtier de guidage d'air pour véhicules à moteur

(30) Priorität: 30.10.1992 DE 4236674
(43) Veröffentlichungstag der Anmeldung: 04.05.1994
(73) Patentinhaber: Behr GmbH & Co., D-70469 Stuttgart (DE)
(72) Erfinder: Komowski, Michael, D-70619 Stuttgart (DE); Voigt, Klaus, D-74321 Bietigheim-Bissingen (DE)
(74) Vertreter: Wasmuth, Rolf, Dipl.-Ing.

(56) Entgegenhaltungen:
- EP-A- 0 414 946
- EP-A- 0 496 657
- DE-A- 3 335 083
- US-A- 4 632 433
- SOVIET PATENTS ABSTRACTS, P,Q Sektion, Woche 8901, 15. Feber 1989 DERWENT PUBLICATIONS LTD, London

## Beschreibung

Die Erfindung betrifft ein Luftführungsgehäuse für Belüftungs-, Heizungs- oder Klimaanlagen in einem Kraftfahrzeug nach dem Oberbegriff des Anspruchs 1.

Derartige Luftführungsgehäuse sind allgemein bekannt. Sie sind aus Kunststoff gefertigt und weisen Öffnungen auf, die zur Montage notwendig sind oder der Luftführung für anzuschließende Luftführungskanäle dienen sollen. Das Verschließen derartiger Öffnungen oder der Anschluß von Luftführungskanälen, Luftzufuhrstutzen oder dgl. an diese Öffnungen ist meist sehr aufwendig, da eine Vielzahl von Befestigungsmitteln, wie Schrauben oder dgl., anzubringen ist. Bei der Befestigung ist ferner darauf zu achten, daß eine ausreichende Dichtigkeit gewährleistet ist.

Der Erfindung liegt die Aufgabe zugrunde, Luftführungsgehäuse der genannten Art derart weiterzubilden, daß bei geringem Montageaufwand und hoher Dichtigkeit das Befestigen von Anschlußteilen an den im Luftführungsgehäuse vorgesehenen Öffnungen möglich ist.

Die Aufgabe wird nach den kennzeichnenden Merkmalen des Anspruchs 1 gelöst.

Durch die Nut/Feder-Verbindung zwischen Dichtungssteg und Dichtungsnut wird beim Aufsetzen des Anschlußteils bereits die notwendige dichte Verbindung hergestellt. Die Befestigung des Anschlußteiles am Luftführungsgehäuse erfolgt erst nach dem luftdichten Aufsetzen durch Drehen des Anschlußteils, wodurch eine vorgesehene Drehverriegelung geschlossen wird, durch die das Anschlußteil am Luftführungsgehäuse gehalten ist. Gerade bei den aus Kunststoff gefertigten Luftführungsgehäusen ist ohne zusätzliche Dichtungen und ohne manuell anzubringende Befestigungsmittel eine sichere, luftdichte Montage erzielt.

In besonderer Ausgestaltung der Erfindung ist eine im Luftführungsgehäuse vorgesehene Luftspirale für ein Luftgebläse durch ein als Verschlußdeckel ausgebildetes Anschlußteil verschließbar, wobei der Verschlußdeckel eine zur Luftspirale offene Steckaufnahme für den Antriebsmotor des Luftgebläses aufweist und somit als Träger für die Gebläseeinheit fungiert. Es ist so eine Montage des Gebläses möglich, wobei elektrische Leitungen außerhalb des Luftführungsgehäuses anzuschließen sind. Durch einfaches Aufsetzen des Verschlußdeckels auf die Öffnung der Luftspirale werden die vormontierte Gebläseeinheit im Luftführungsgehäuse angeordnet, die Montageöffnung durch den Verschlußdeckel luftdicht verschlossen und durch einfache Drehbewegung der Verschlußdeckel am Luftgehäuse axial formschlüssig gehalten.

In besonderer Ausgestaltung weist die Steckaufnahme einen Kühlluftkanal auf, der in montierter Stellung des Verschlußdeckels mit einem Luftabzweigstutzen der Luftspirale verbunden ist, so daß bei Schließen der Drehverriegelung gleichzeitig die Verbindung für eine notwendige Kühlluftzufuhr zum Antriebsmotor der Gebläseeinheit erzielt ist.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: eine Ansicht eines Luftführungsgehäuses mit montierten Anschlußteilen, wie Luftzufuhrstutzen und Verschlußdeckel,
- Fig. 2: eine Teilansicht auf das dem Luftführungsgehäuse zugewandte Ende des Rohrstutzens,
- Fig. 3: eine Draufsicht auf eine Drehverriegelung,
- Fig. 4: einen Schnitt durch die Drehverriegelung längs der Linie IV-IV in Fig. 3,
- Fig. 5: eine Draufsicht auf eine andere Ausführungsform einer Drehverriegelung,
- Fig. 6: einen Schnitt durch eine Drehverriegelung längs der Linie VI-VI in Fig. 5,
- Fig. 7: eine Seitenansicht einer Drehverriegelung gemäß Fig. 5,
- Fig. 8: eine Draufsicht auf eine zu verschließende Öffnung des Luftführungsgehäuses,
- Fig. 9: eine Draufsicht auf einen Verschlußdeckel,

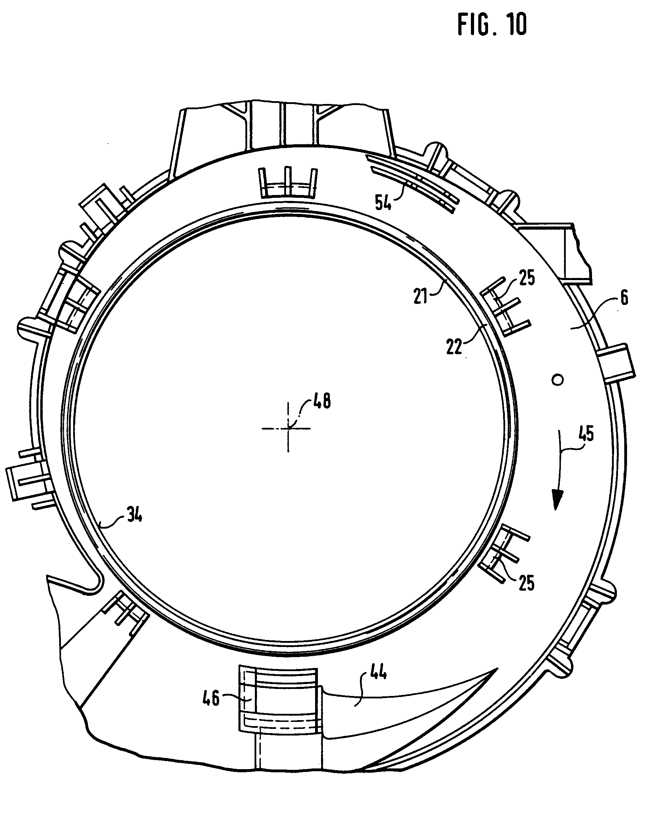

- Fig. 10: eine Draufsicht auf eine Luftspirale des Luftführungsgehäuses mit Montageöffnung für die Gebläseeinheit,

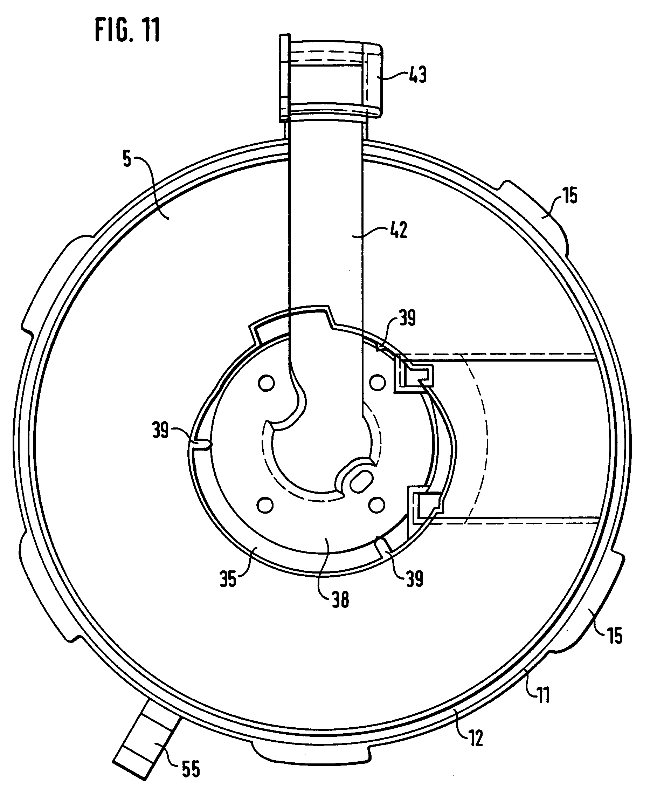

- Fig. 11: eine Draufsicht auf einen Verschlußdeckel für die Montageöffnung in Fig. 10,
- Fig. 12: eine perspektivische Ansicht auf die Enden des Kühlluftkanals und des Luftabzweigstutzens vor ihrem Zusammenfügen,
- Fig. 13: eine perspektivische Ansicht gemäß Fig. 12 aus einer anderen Blickrichtung,
- Fig. 14: eine perspektivische Ansicht der zusammengefügten Enden von Kühlluftkanal und Luftabzweigstutzen.

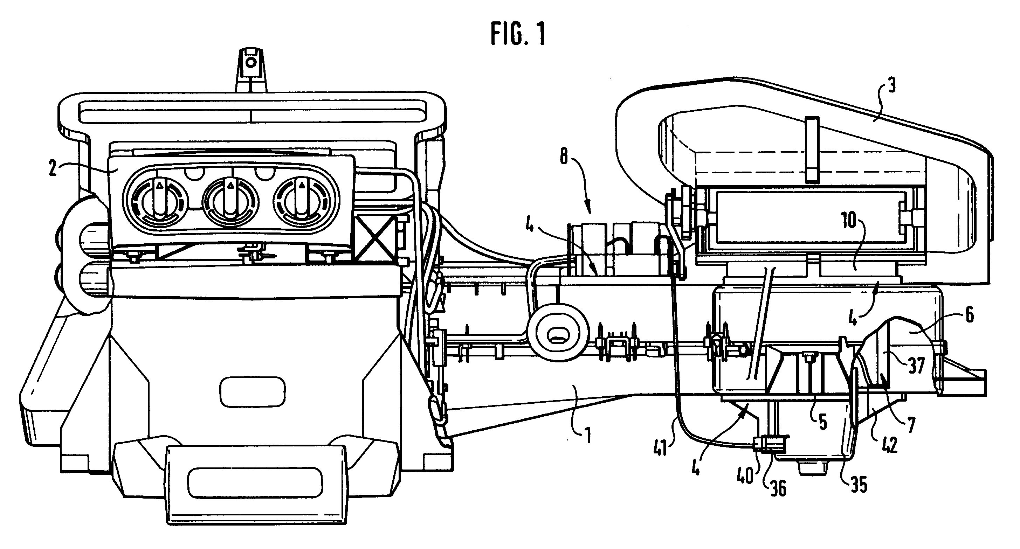

Das in Fig. 1 dargestellte Luftführungsgehäuse 1 besteht aus einem langgestreckten Grundkörper, an dessen einem Ende eine Luftverteil- und Steuereinrichtung 2 und an dessen anderem Ende ein Luftzufuhrstutzen 3 angeordnet ist. Der Luftzufuhrstutzen ist durch eine bajonettartige Drehverriegelung 4 an dem Grundkörper des Luftführungsgehäuses 1 befestigt. Auf der dem Luftzufuhrstutzen 3 abgewandten Seite des Luftführungsgehäuses 1 ist ein Verschlußdeckel 5 angeordnet, der eine im Luftführungsgehäuse 1 ausgebildete Luftspirale 6 eines Luftgebläses 7 verschließt. Auch der Verschlußdeckel 5 ist mit einer bajonettartigen Drehverriegelung 4 am Luftführungsgehäuse 1 gehalten.

Zwischen den Enden des Luftführungsgehäuses 1 ist auf der dem Luftzufuhrstutzen 3 zugewandten Oberseite des Luftführungsgehäuses 1 ein deckelartiger Träger 8 angeordnet, der eine Öffnung im Grundkörper des Luftführungsgehäuses 1 verschließt und am Luftführungsgehäuse durch eine Drehverriegelung 4 gehalten ist.

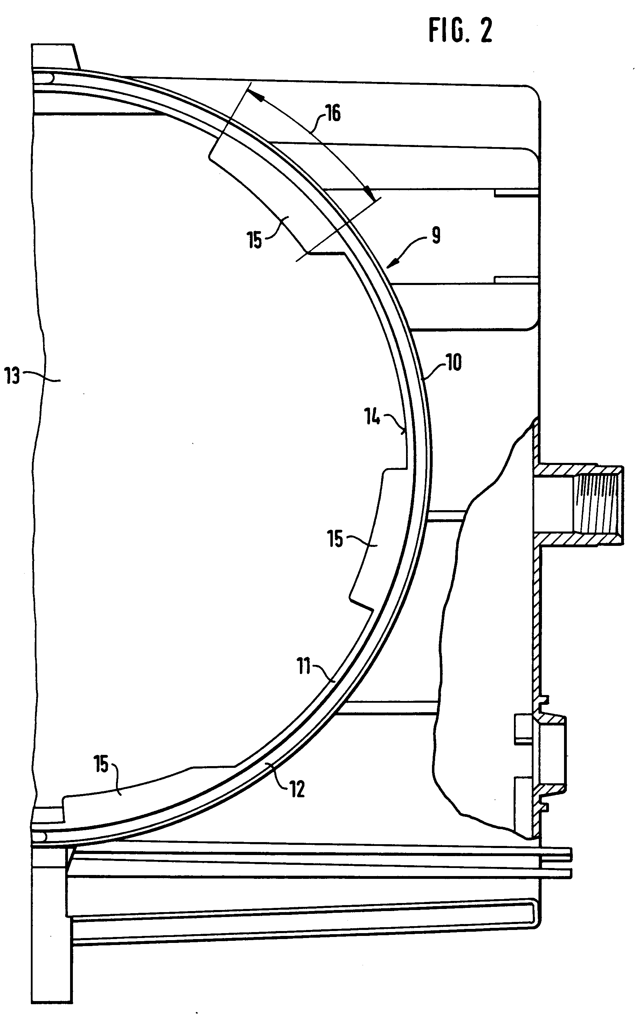

In Fig. 2 ist das dem Luftführungsgehäuse 1 zugewandte Ende des Luftzufuhrstutzens 3 teilweise dargestellt. Das Anschlußende 9 ist durch einen Rohrstutzen 10 gebildet, dessen dem Luftführungsgehäuse 1 zugewandte Stirnseite eine Ringfläche 11 bildet, in der axial eine umlaufende Dichtungsnut 12 eingebracht ist. An der Innenkante 14 der Ringfläche 11 sind radial in die Öffnung 13 des Rohrstutzens 10 einragende Flansche 15 ausgebildet, die sich in Umfangsrichtung der Ringfläche 11 über einen Teilumfangswinkel 16 erstrecken, der vorzugsweise 25° beträgt.

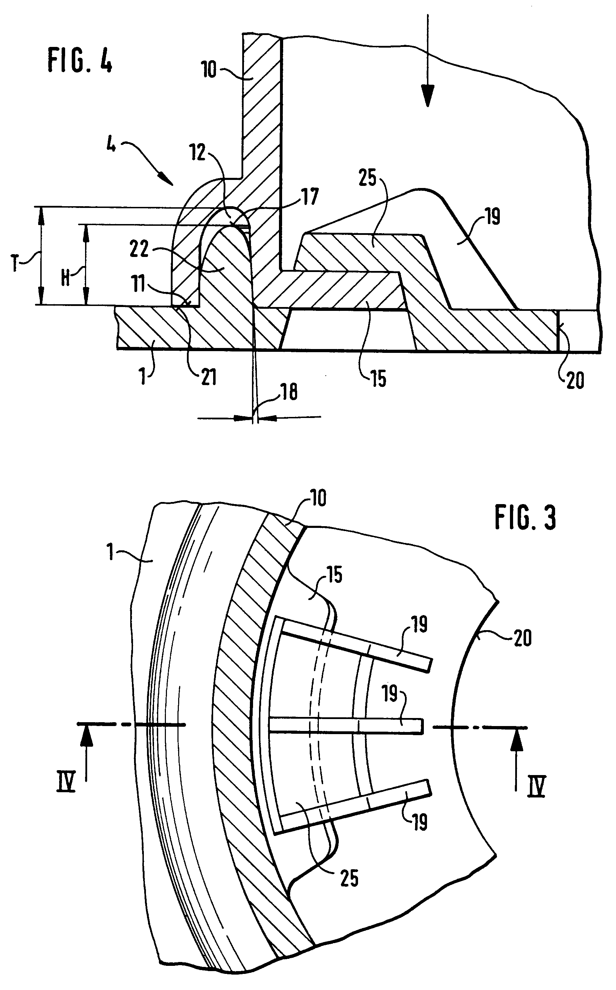

Wie die Fig. 3 und 4 zeigen, ist der Dichtungsnut 12 am Luftführungsgehäuse 1 ein Dichtungssteg 22 zugeordnet, der eine Öffnung 20 für den Lufteintritt vom Luftzufuhrstutzen in das Luftführungsgehäuse umgibt. Der Dichtungssteg 22 steht lotrecht auf der durch die Öffnung 20 bestimmten Ebene und weist eine Höhe H auf, die geringer ist als die axiale Tiefe T der Dichtungsnut 12. Die axiale Stirnseite 17 des Dichtungssteges 22 ist über ihren ganzen Umfang gerundet, so daß ein einfaches Einführen des Dichtungssteges 22 in die Dichtungsnut 12 möglich ist. In axialer Richtung verjüngt sich der Dichtungssteg zu seiner gerundeten Stirnseite 17 mit einem geringen Winkel 18 von vorzugsweise 2°.

Die radial in den Rohrstutzen 10 ragenden Flansche 15 werden durch eine Drehbewegung des Luftzufuhrstutzens 3 um die Achse des Rohrstutzens 10 durch übergreifende Flansche 25 gehalten, welche im Schnitt im wesentlichen L-Form haben. Zur Versteifung weisen die übergreifenden Flansche 25 radial verlaufende Versteifungsrippen 19 auf (Fig. 3, 4). Im Ausführungsbeispiel nach den Fig. 3 und 4 liegen die übergreifenden Flansche 25 innerhalb des durch den Dichtungssteg 22 gebildeten Ringes. In Umfangsrichtung erstrecken sich die übergriffenen Flansche 15 über einen größeren Winkel 16 (Fig. 2) als die übergreifenden Flansche 25.

Durch axiales Aufsetzen des Rohrstutzens 10 auf das Luftführungsgehäuse 1 tritt der Dichtungssteg 22 in die Dichtungsnut 12 nach Art einer Nut/Feder-Verbindung ein. Der sich zu seinem Fuß erweiternde Dichtungssteg gewährleistet eine weitgehend luftdichte Abdichtung des Rohrstutzens 10 am Luftführungsgehäuse 1, wobei die stirnseitige Ringfläche 11 des Rohrstutzens 10 auf der den Dichtungssteg 22 tragenden Ringfläche 21 des Luftführungsgehäuses 1 aufliegt. Die Dichtwirkung wird erhöht, wenn die radiale Breite der Dichtungsnut 12 geringer ist als die radiale Dicke des Fußes des Dichtungssteges 22.

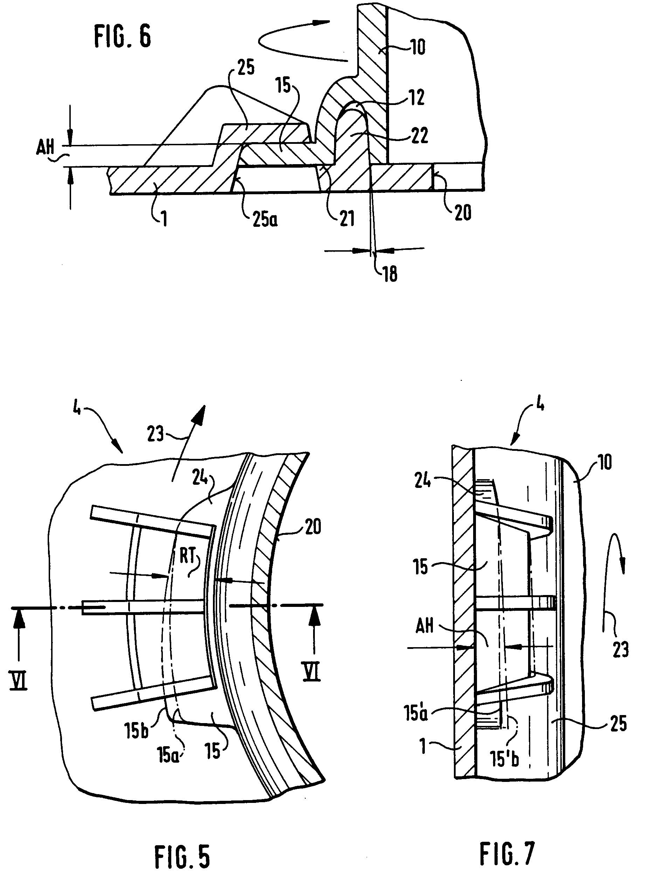

Wie die Fig. 5 bis 7 zeigen, kann es vorteilhaft sein, die Flansche 15 bzw. 25 radial außerhalb des Dichtungssteges 22 bzw. der Dichtungsnut 12 anzuordnen.

Wie Fig. 5 zeigt, kann die sich in Umfangsrichtung erstreckende Kante 15a des übergriffenen Flansches 15 auf einem Kreisbogen um die Achse des Rohrstutzens 10 liegen. Ist die Innenkante 25a des übergreifenden Flansches 25 entsprechend auf einem Kreisbogen liegend ausgebildet, kann die Drehverriegelung 4 in Drehrichtung 23 durchgedreht werden. Dies kann für eine erleichterte Montage zweckmäßig sein.

Bevorzugt liegt die Umfangskante 15b des übergriffenen Flansches 15 auf einem Kreisbogen, dessen Mittelpunkt zur Achse des Rohrstutzens 10 derart versetzt liegt, daß die radiale Tiefe RT des Flansches 15 entgegen Drehrichtung 23 zunimmt. Liegt die Innenkante 25a des übergreifenden Flansches 25 rotationssymmetrisch zur Achse des Rohrstutzens 10, so erfolgt bei der Drehbewegung ein radiales Festklemmen des übergriffenen Flansches 15 zwischen der Innenkante 25a des übergreifenden Flansches und dem Dichtungssteg 22. Um eine erleichterte Montage zu gewährleisten, ist das vordere Ende 24 des übergriffenen Flansches 15 in Drehrichtung verjüngt ausgebildet.

Anstelle oder zusätzlich zu dem vorstehend beschriebenen radialen Einspannen des übergriffenen Flansches 15 zwischen dem Dichtungssteg 22 und der Innenkante 25a des übergreifenden Flansches 25 kann ein axiales Festspannen zwischen dem übergreifenden Flansch 25 und der Ringfläche 21 am Luftführungsgehäuse 1 vorgesehen sein. Hierzu wird die axiale Höhe AH des übergriffenen Flansches 15 entgegen der Drehrichtung ansteigend ausgebildet, wie dies mit der strichpunktierten Linie 15'b in Fig. 7 angedeutet ist. Eine gleichmäßige Höhe des Flansches 15 kann ebenfalls zweckmäßig sein und ist mit der strichlierten Linie 15'a in Fig. 7 angedeutet. Zum leichteren Einfädeln des übergriffenen Flansches 15 unter den übergreifenden Flansch 25 kann das in Drehrichtung vorne liegende Ende 24 keilförmig verjüngt ausgebildet sein. Um ein axiales Festspannen des übergriffenen Flansches 15 zu erreichen, darf die maximale Höhendifferenz des übergreifenden Flansches 25 zur Ringfläche 21 am Luftführungsgehäuse 1 nicht größer sein als die maximale Höhe AH des übergriffenen Flansches 15.

Der übergriffene Flansch 15 hat eine axiale Dicke, die geringer ist als die Höhe H des Dichtungssteges 22; in gleicher Weise kann die Höhe des übergreifenden Flansches 25 geringer als die Höhe H des Dichtungssteges 22 ausgebildet sein.

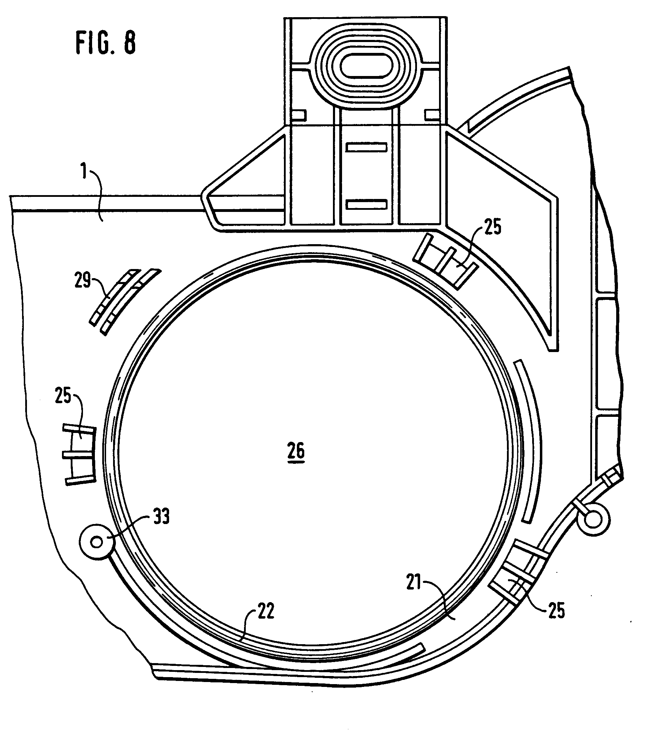

Die in Fig. 8 gezeigte Öffnung 26 des Luftführungsgehäuses 1 ist von einem Verschlußdeckel 27 verschließbar, der als Träger für Steuer- und Schalteinrichtungen vorgesehen ist. Hierzu sind im Verschlußdeckel 27 Aufnahmen 28 ausgebildet, die sowohl auf der dem Luftführungsgehäuse zugewandten Seite, wie auf der abgewandten Seite am Verschlußdeckel 27 vorgesehen sein können. Temperaturempfindliche Bauteile werden auf der dem Luftführungsgehäuse zugewandten Seite des Verschlußdeckels 27 befestigt, wodurch eine ausreichende Kühlung gewährleistet ist.

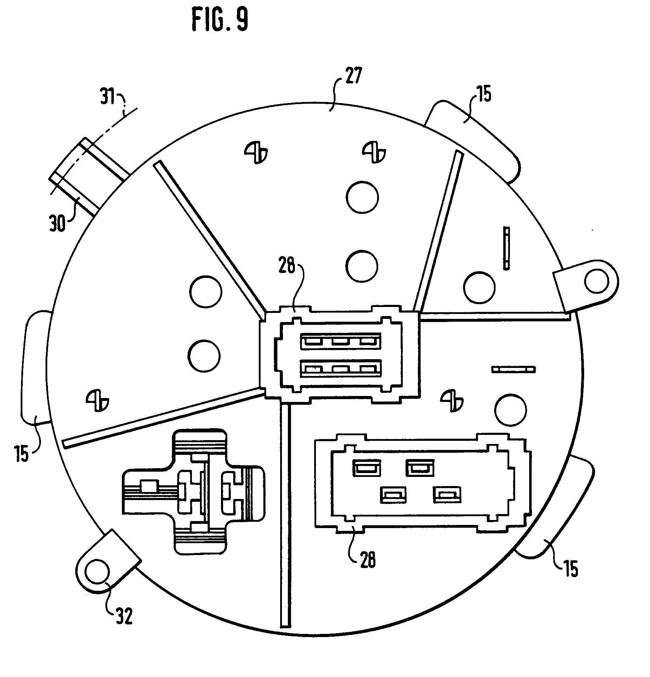

Die die Öffnung 26 umgebende Ringfläche 21 am Luftführungsgehäuse 1 weist wieder einen Dichtungssteg 22 auf. Außerhalb des Dichtungssteges sind entsprechend den Fig. 5 bis 7 übergreifende Flansche 25 angeordnet. Im gezeigten Ausführungsbeispiel sind über den Umfang verteilt drei Flansche 25 vorgesehen, die mit ungleichen Abständen etwa sternförmig zueinander liegen. Außerhalb des durch die übergreifenden Flansche 25 bestimmten Drehkreises ist am Luftführungsgehäuse eine Rastaufnahme 29 vorgesehen, dem am Verschlußdeckel 27 ein Rastbügel 30 zugeordnet ist. Wie Fig. 9 zeigt, kragt der Rastbügel 30 radial über die Umfangskanten der Flansche 15 hinaus; sowohl die Flansche 15 am Verschlußdeckel 27 wie die Flansche 25 am Luftführungsgehäuse 1 liegen innerhalb des Drehkreises 31 des Rastbügels 30.

Der Verschlußdeckel 27 wird auf die Öffnung 26 aufgesetzt, wobei der Dichtungssteg 21 in die nicht dargestellte Dichtungsnut am Verschlußdeckel 27 eingreift und ein weitgehend luftdichtes Verschließen gewährleistet. Durch Drehen des Deckels greifen die Flansche 15 unter die Flansche 25 am Luftführungsgehäuse 1, wodurch der Deckel axial am Luftführungsgehäuse 1 festgelegt ist. Die Drehbewegung wird so weit fortgesetzt, bis der Rastbügel 30 in die Rastaufnahme 29 einrastet, wodurch der Verschlußdeckel 27 auch in Umfangsrichtung formschlüssig am Luftführungsgehäuse 1 gesichert ist. Es kann zweckmäßig sein, am Verschlußdeckel 27 ein oder mehrere Befestigungsaugen 32 vorzusehen, die in Raststellung des Verschlußdeckels 27 über einem Befestigungsdom 33 am Luftführungsgehäuse 1 zu liegen kommen, um mit einer Befestigungsschraube ein unbeabsichtigtes Lösen des Deckels mit Sicherheit auszuschließen.

Die Luftspirale 6 des im Luftführungsgehäuse 1 angeordneten Luftgebläses 7 weist auf der dem Luftzufuhrstutzen 3 abgewandten Seite eine Öffnung 34 auf, die der Montage des Luftgebläses 7 dient. Das Gebläserad 37 (Fig. 1) wird axial durch die Öffnung 34 in der Luftspirale 6 angeordnet. Der Verschlußdeckel 5, mit dem die Montageöffnung 34 zu verschließen ist, weist eine becherförmige Steckaufnahme 35 auf, die zur Öffnung 34 hin offen ist. In die Steckaufnahme wird der elektrische Antriebsmotor eingesteckt und durch einen in der Wand der Steckaufnahme 35 vorgesehenen Steckerschacht 36 mit einer elektrischen Versorgungsleitung verbunden. Der Motor 38 wird in der Steckaufnahme 35 durch Axialrippen 39 radial weitgehend spielfrei gehalten und ist durch den im Steckerschacht liegenden Stecker 40 (Fig. 1) der elektrischen Anschlußleitung 41 (Fig. 1) axial gesichert. Zur Kühlung des Elektromotors mündet in die Steckaufnahme 35 ein Kühlluftkanal 42, der sich radial über den Rand des Verschlußdeckels 5 hinaus erstreckt. Das freie Ende 43 des Kühlluftkanals 42 liegt außerhalb des durch die Umfangskanten der Flansche 15 bestimmten Kreises. Wie auch aus Fig. 1 zu ersehen, verläuft der Kühlluftkanal aufwärts in Richtung auf die Kühlluftspirale 6 und schließt in verrasteter Montagestellung des Verschlußdeckels 5 an einen Luftabzweigstutzen 44 an. Der Luftabzweigstutzen 44 verläuft im wesentlichen in Strömungsrichtung 45 der in der Luftspirale 6 geförderten Luft, wodurch in den Luftabzweigstutzen 44 ein Luftanteil eintritt, der als Kühlluftstrom in den Kühlluftkanal 42 übertritt.

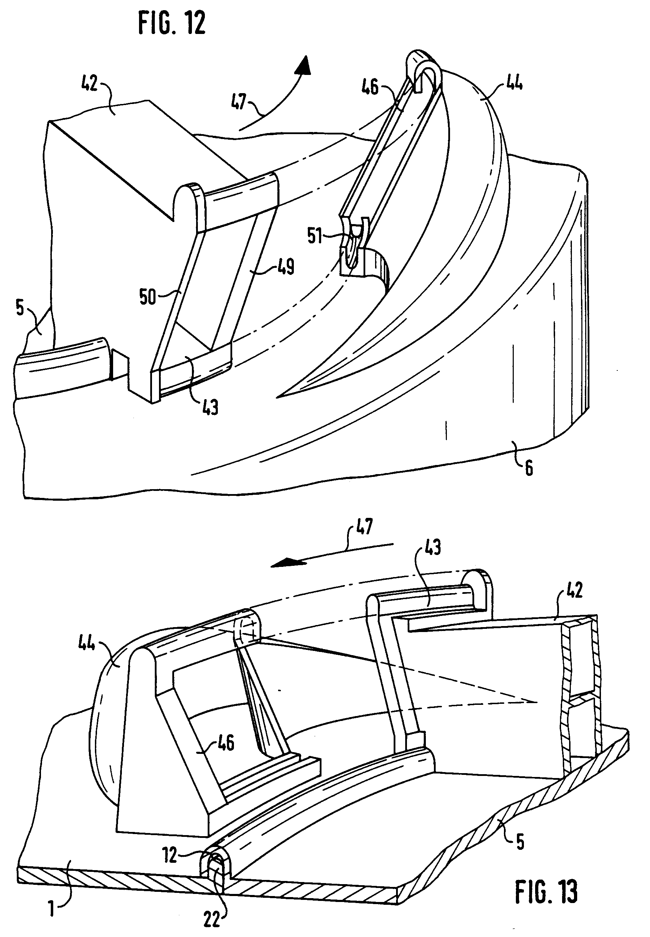

Das radial zur Öffnung 34 ausgerichtete Ende 46 des Luftabzweigstutzens 44 ragt geringfügig in den Drehkreis des Endes 43 des Kühlluftkanals 42 hinein. Bei Aufsetzen des Verschlußdeckels 5 auf die Öffnung 34 wird - bei gleichzeitiger Montage des Luftgebläses 7 - der die Öffnung 34 umgebende Dichtungssteg 22 der Ringfläche 21 in die Dichtungsnut 12 der am Verschlußdeckel 5 vorgesehenen Ringfläche 11 eintreten und in der bereits beschriebenen Weise ein luftdichtes Verschließen der Öffnung 34 gewährleisten. Wie die Fig. 12 bis 14 zeigen, wird nach dem Aufsetzen des Verschlußdeckels 5 dieser in Drehrichtung 47 um die Mittelachse 48 der Öffnung 34 gedreht, um die über den Umfang des Verschlußdeckels 5 verteilten Flansche 15 in Eingriff mit den am Luftführungsgehäuse 1 über den Umfang der Öffnung 34 verteilt angeordneten übergreifenden Flansche 25 zu bringen. Die übergriffenen Flansche 15 liegen ebenso wie die übergreifenden Flansche 25 außerhalb des durch den Dichtungssteg 22 und die Dichtungsnut 12 bestimmten Dichtungskreises.

Da das freie Ende 46 des Luftabzweigstutzens 44 in den Drehkreis des freien Endes 43 des Kühlluftkanals 42 einragt, kann durch die Drehbewegung eine luftdichte Verbindung zwischen dem Luftabzweigstutzen 44 und dem Kühlluftkanal 42 geschaffen werden. Hierzu ist an der Stirnseite des freien Endes 43 des Kühlluftkanals 42 ein äußerer, rahmenartiger Dichtungssteg 49 angeordnet, der sich über die in Umfangsrichtung erstreckenden Kanten, wie die in Drehrichtung 47 vorlaufende Kante des freien Endes, erstreckt. An der nachlaufenden Kante des freien Endes 43 ist eine Anschlagleiste 50 ausgebildet, welche radial das freie Ende 43 bzw. den teilrahmenartig umlaufenden Dichtungssteg 49 überragt.

An dem freien Ende 46 des Luftabzweigstutzens 44 ist nach Art eines Teilrahmens eine Dichtungsnut 51 an den in Umfangsrichtung sich erstreckenden Kanten sowie der in Drehrichtung 47 gesehenen hinteren Kante angeordnet. Die Dichtungsnut 51 liegt radial vor dem Ende 46, so daß bei der Drehbewegung in Pfeilrichtung 47 der Dichtungssteg 49 in die Dichtungsnut 51 eintreten kann, wodurch eine weitgehend luftdichte Verbindung zwischen dem Kühlluftkanal 42 und dem Luftabzweigstutzen 44 geschaffen ist. Die Anschlagleiste 50 liegt dabei an der zugewandten Seite des freien Endes 46 des Abzweigstutzens 44 an und gewährleistet auch an dieser Kante eine ausreichende Abdichtung. Insbesondere sind die in Umfangsrichtung sich erstreckenden Abschnitte des Dichtungssteges 49 und der Dichtungsnut 51 kreisbogenförmig um die Mittelachse 48 angeordnet, so daß eine ungehinderte Drehbewegung auch beim Ineinandergreifen der freien Enden 43 und 46 gewährleistet bleibt.

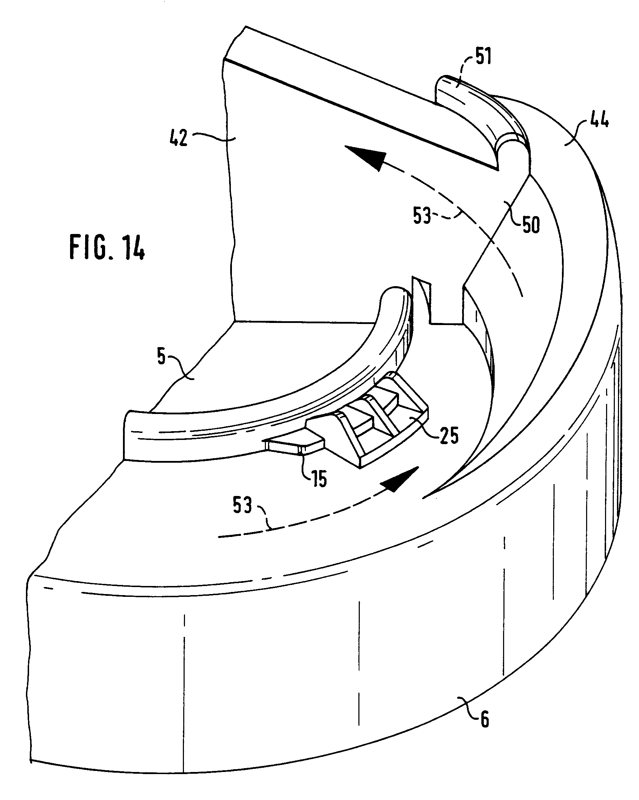

Bevorzugt ist am Verschlußdeckel 5 ein radial auskragender Rastarm 55 vorgesehen, dem am Luftführungsgehäuse eine Rastaufnahme 54 zugeordnet ist. Wie bereits zu den Fig. 8 und 9 beschrieben, liegt die Rastaufnahme 54 außerhalb des Drehkreises der am Verschlußdeckel 5 angeordneten übergriffenen Flansche 15 sowie der auf einem Kreis angeordneten übergreifenden Flansche 25. Die Rastaufnahme 54 ist derart angeordnet, daß in der verrasteten Stellung die freien Enden 43 und 46 des Kühlluftkanals 42 bzw. des Luftabzweigstutzens 44 lagegerecht zueinander liegen, um einerseits einen Luftübertritt aus der Kühlluftspirale zu gewährleisten und andererseits die notwendige Dichtigkeit herzustellen. Wie Fig. 14 zeigt, strömt die Luft in der Kühlluftspirale 6 entsprechend den Pfeilen 53, wobei ein Luftanteil in den Kühlluftkanal 42 übertritt und in die Steckaufnahme 35 ausströmt, um dort den elektrischen Antriebsmotor des Gebläserades 37 zu kühlen.

## Patentansprüche

1. Luftführungsgehäuse für Belüftungs-, Heizungs- oder Klimaanlagen in einem Kraftfahrzeug, mit Öffnungen (13, 20, 24) zur Montage von Anschlußteilen (5, 10, 27) wie Luftzufuhrstutzen (3), Verschlußdeckeln (5, 27) o. dgl., wobei eine Öffnung (13, 20, 24) von einer Ringfläche (11) umgeben ist, an der eine Ringfläche (21) eines montierten Anschlußteils (5, 10, 27) dichtend anliegt,
**dadurch gekennzeichnet,** daß auf der einen Ringfläche (11, 21) ein umlaufender Dichtungssteg (22) und in der anderen Ringfläche (21, 11) eine umlaufende Dichtungsnut (12) vorgesehen ist, wobei der Dichtungssteg (22) und die Dichtungsnut (12) nach Art einer Nut/Feder-Verbindung axial ineinandergreifen und das Anschlußteil (5, 10, 27) in Umfangsrichtung der Ringflächen (11, 21) zum Schließen einer Drehverriegelung (4) drehbar am Luftführungsgehäuse (1) gehalten ist.

2. Luftführungsgehäuse nach Anspruch 1,
**dadurch gekennzeichnet,** daß die Drehverriegelung (4) nach Art einer Bajonettverbindung aus wenigstens zwei am Anschlußteil (5, 10, 27) vorgesehenen, sich jeweils über einen Teilumfangswinkel (16) erstreckenden Flanschen (15) und wenigstens zwei am Luftführungsgehäuse (1) vorgesehenen, sich jeweils über einen Teilumfangswinkel erstreckenden Flanschen (25) besteht, die in Eingriffsstellung einander übergreifen, wobei vorzugsweise die Flansche (15, 25) radial innerhalb des Dichtungssteges (22) bzw. der Dichtungsnut (12) oder radial außerhalb des Dichtungssteges (22) bzw. der Dichtungsnut (12) angeordnet sind.

3. Luftführungsgehäuse nach Anspruch 1 oder 2,
**dadurch gekennzeichnet,** daß der übergriffene Flansch (15) am Anschlußteil (5, 10, 27) und der übergreifende Flansch (25) am Luftführungsgehäuse (1) angeordnet ist, wobei vorzugsweise der übergriffene Flansch (15) in der Ebene der eine Dichtungsnut (12) enthaltenden Ringflache (11) liegt.

4. Luftführungsgehäuse nach einem der Ansprüche 1 bis 3,
**dadurch gekennzeichnet,** daß die Dichtungsnut (12) in der Ringfläche (11) des Anschlußteiles (5, 10, 27) vorgesehen ist und vorzugsweise die radiale Breite der Dichtungsnut (12) geringer ist als die radiale Dicke des Fußes des Dichtungssteges (22).

5. Luftführungsgehäuse nach einem der Ansprüche 1 bis 4,
**dadurch gekennzeichnet,** daß die in Umfangsrichtung gemessene Erstreckung des übergriffenen Flansches (15) größer ist als die in Umfangsrichtung gemessene Erstreckung des übergreifenden Flansches (25).

6. Luftführungsgehäuse nach einem der Ansprüche 1 bis 5,
**dadurch gekennzeichnet,** daß die Höhe (AH) des übergriffenen Flansches (15) in Drehrichtung (47) des Anschlußteiles (5, 10, 27) zunimmt und die Aufnahmehöhe des übergreifenden Flansches (25) vorzugsweise geringer ist als die maximale Höhe (AH) des übergriffenen Flansches (15), wobei insbesondere die radiale Tiefe (RT) des übergriffenen Flansches (15) in Drehrichtung (47) zunimmt und die radiale Aufnahmetiefe des übergreifenden Flansches (25) vorzugsweise geringer ist als die maximale radiale Tiefe (RT) des übergriffenen Flansches.

7. Luftführungsgehäuse nach einem der Ansprüche 1 bis 6,
**dadurch gekennzeichnet,** daß die axiale Höhe (H) des Dichtungssteges (22) geringer ist als die axiale Tiefe (T) der Dichtungsnut (12).

8. Luftführungsgehäuse nach einem der Ansprüche 1 bis 7,
**dadurch gekennzeichnet,** daß der Dichtungssteg (22) in axialer Richtung zu seiner vorzugsweise gerundeten Stirnseite (17) hin mit einem geringem Winkel (18) von etwa 2° leicht verjüngt zuläuft.

9. Luftführungsgehäuse nach einem der Ansprüche 1 bis 8,
**dadurch gekennzeichnet,** daß das Anschlußteil (5, 10, 27) am Luftführungsgehäuse (1) verrastbar ist und vorzugsweise einen radial auskragenden Rastbügel (30, 55) aufweist, dem am Luftführungsgehäuse (1) eine Rastaufnahme (29, 54) zugeordnet ist, wobei insbesondere die Flansche (15, 25) innerhalb des Drehkreises des Rastbügels (30, 55) liegen.

10. Luftführungsgehäuse nach einem der Ansprüche 1 bis 9,
**dadurch gekennzeichnet,** daß das Anschlußteil (5, 10, 27) ein Verschlußdeckel (5) für eine Luftspirale (6) eines Luftgebläses (7) im Luftführungsgehäuse (1) ist und der Verschlußdeckel (5) eine zur Luftspirale (6) offene Steckaufnahme (39) für den Antriebsmotor (38) des Luftgebläses (7) aufweist, wobei vorzugsweise in die Steckaufnahme (39) ein Kühlluftkanal (42) mündet, der mit einem Luftabzweigstutzen (44) der Luftspirale (6) verbindbar ist.

11. Luftführungsgehäuse nach Anspruch 10,
**dadurch gekennzeichnet,** daß die einander zugewandten Enden (43, 46) des Luftabzweigstutzens (44) und des Kühlluftkanals (42) in der verrasteten Montagestellung des Verschlußdeckels (5) über eine Nut/Feder-Verbindung weitgehend luftdicht miteinander verbunden sind.

12. Luftführungsgehäuse nach Anspruch 11,
**dadurch gekennzeichnet,** daß die Stirnseite des freien Endes (43) des Kühlluftkanals an ihren in Drehrichtung (47) sich erstreckenden Kanten sowie an ihrer in Drehrichtung (47) vorlaufenden Kante einen äußeren, teilrahmenartigen Dichtungssteg (49) aufweist, der in eine entsprechende Dichtungsnut (51) eingreift, die an der Stirnseite des freien Endes (46) des Luftabzweigstutzens (44) ausgebildet ist und insbesondere die Stirnseite des freien Endes (43) des Kühlluftkanals an ihrer in Drehrichtung (47) nachlaufenden Kante eine Anschlagleiste (50) trägt, die die Stirnseite überragt und in einer vorzugsweise verrasteten Stellung des Verschlußdeckels (5) an der Wandung des Luftabzweigstutzens (44) anliegt.

13. Luftführungsgehäuse nach einem der Ansprüche 10 bis 12,
**dadurch gekennzeichnet,** daß das dem Luftabzweigstutzen (44) zugewandte Ende (43) des Kühlluftkanals (42) radial über den Dichtungssteg (49) hinausragt.

## Claims

1. An air guide housing for ventilating, heating or air conditioning systems in a motor vehicle, with apertures (13, 20, 24) for the mounting of connecting parts (5, 10, 27) such as air feed connectors (3), closure covers (5, 27) or the like, whereby an aperture (13, 20, 24) is surrounded by an annular surface (11) against which an annular surface (21) of an assembled connection part (5, 10, 27) bears in sealing-tight manner, characterised in that an encircling sealing web (22) is provided on one annular surface (11, 21) and an encircling sealing groove (12) is provided in the other annular surface (21, 11), the sealing web (22) and the sealing groove (12) engaging each other axially in the manner of a tongue-and-groove joint, the connecting part (5, 10, 27) being supported rotatably on the air guide housing (1) in the peripheral direction of the annular surfaces (11, 21) for closing a rotary locking device (4).

2. An air guide housing according to claim 1, characterised in that, in the manner of a bayonet connection, the rotary locking device (4) consists of at least two flanges (25) provided on the connecting part (5, 10, 27) and extending respectively over an angular part (16) of the periphery and at least two flanges (25) provided on the air guide housing (1) and extending in each case over an angular part of the periphery, said flanges engaging over one another in the position of engagement, whereby preferably the flanges (15, 25) are disposed radially inside the sealing web (22) or sealing groove (12) or radially outside the sealing web (22) or sealing groove (12) respectively.

3. An air guide housing according to claim 1 or 2, characterised in that the flange (15) on the connecting part (5, 10, 27) and the flange (25) which engages over it is disposed on the air guide housing (1), whereby preferably the flange (15) lies in the plane of the annular surface (11) containing a sealing groove (12).

4. An air guide housing according to one of claims 1 to 3, characterised in that the sealing groove (12) is provided in the annular surface (11) of the connection part (5, 10, 27), the radial width of the sealing groove (12) being preferably smaller than the radial thickness of the root of the sealing web (22).

5. An air guide housing according to one of claims 1 to 4, characterised in that, measured in the peripheral direction, the extension of the flange (15) is greater than the extension of the flange (25) engaging over it and measured in a peripheral direction.

6. An air guide housing according to one of claims 1 to 5, characterised in that the height (AH) of the underlying flange (15) increases in the direction of rotation (47) of the connection part (5, 10, 27) and the accommodating height of the overlying flange (25) is preferably less than the maximum height (AH) of the underlying flange (15) whereby in particular the radial depth (RT) of the underlying flange (15) increases in the direction of rotation (47) while the radial accommodating depth of the overlying flange (25) is preferably less than the maximum radial depth (RT) of the underlying flange.

7. An air guide housing according to one of claims 1 to 6, characterised in that the axial height (H) of the sealing web (22) is less than the axial depth (T) of the sealing groove (12).

8. An air guide housing according to one of claims 1 to 7, characterised in that the sealing web (22) extends in a slight taper in an axial direction towards its preferably rounded end (17) at a slight angle (18) of about 2°.

9. An air guide housing according to one of claims 1 to 8, characterised in that the connecting part (5, 10, 27) can be snap-fitted onto the air guide housing (1) and preferably comprises a radially projecting curved catch member (30, 55) with which a catch recess (29, 54) on the air guide housing (1) is associated, the flanges (15, 25) in particular being disposed inside the circle of rotation of the curved catch member (30, 55).

10. An air guide housing according to one of claims 1 to 9, characterised in that the connecting part (5, 10, 27) is a closure cover (5) for an air spiral (6) of an air blower (7) in the air guide housing (1), the closure cover (5) comprising, open to the air spiral (6), a push-in housing (39) for the drive motor (38) of the air blower (7), a cooling air duct (42) preferably discharging into the push-in housing (39) and being adapted for connection to an air branch connector (44) on the air spiral (6).

11. An air guide housing according to claim 10, characterised in that the mutually facing ends (43, 46) of the air branch connector (44) and of the cooling air duct (42) are connected to each other in substantially airtight manner by a tongue-and-groove connection when the closure cover (5) is in the snap-fitted position.

12. An air guide housing according to claim 11, characterised in that the end face of the free end (43) of the cooling air duct comprises at its edges which extend in the direction of rotation (47) and also on its (in the direction of rotation (47) leading edge of an outer partly frame-like sealing web (49) which engages a corresponding sealing groove (51) constructed on the end face of the free end (46) of the air branch connector (44) and in particular the end face of the free end (43) of the cooling air duct carries on its (in the direction of rotation 47) trailing edge an abutment strip (50) which projects beyond the end face and, in a preferably snap-engaged position of the closure cover (5), bears on the walls of the air branch connector (44).

13. An air guide housing according to one of claims 10 to 12, characterised in that the end (43) of the cooling air duct (42) which is towards the air branch connector (44) projects radially beyond the sealing web (49).

## Revendications

1. Carter de guidage d'air pour installations d'aération, de chauffage ou de climatisation de véhicules automobiles, comprenant des ouvertures (13, 20, 24) pour le montage d'éléments de raccordement (5, 10, 27) tels que des tubulures d'amenée d'air (3), des couvercles de fermeture (5, 27) ou analogues, une ouverture (13, 20, 24) étant entourée d'une surface annulaire (11) contre laquelle est appliquée à joint étanche une surface annulaire (21) d'un élément de raccordement (5, 10, 27) monté,
caractérisé en ce que, sur l'une des surfaces annulaires (11, 21), est prévue une nervure d'étanchéité périphérique (22) et que, dans l'autre surface annulaire (21, 11), est prévue une rainure d'étanchéité périphérique (12), la nervure d'étanchéité (22) et la rainure d'étanchéité (12) s'engageant axialement l'une dans l'autre à la façon d'un assemblage à rainure et languette, et l'élément de raccordement (5, 10, 27) étant retenu mobile en rotation sur le carter de guidage d'air (1) dans la direction circonférentielle des surfaces annulaires (11, 21) pour exécuter la fermeture d'un verrouillage tournant (4).

2. Carter de guidage d'air selon la revendication 1,
caractérisé en ce que le verrouillage tournant (4) du type assemblage à baïonnette est composé d'au moins deux pattes (15) prévues sur l'élément de raccordement (5, 10, 27), qui s'étendent chacune sur un angle circonférentiel partiel (16), et d'au moins deux pattes (25) s'étendant chacune sur un angle circonférentiel partiel, et prévues sur le carter de guidage d'air (1), qui se recouvrent mutuellement dans la position de prise, les pattes (15, 25) étant de préférence respectivement disposées radialement à l'intérieur de la nervure d'étancheité (22) et de la rainure d'étanchéité (12) ou radialement à l'extérieur de la nervure d'étanchéité (22) et de la rainure d'étanchéité (12).

3. Carter de guidage d'air selon la revendication 1 ou 2,
caractérisé en ce que la patte recouverte (15) est agencée sur l'élément de raccordement (5, 10, 27) et la patte recouvrante (25) sur le carter de guidage d'air (1), la patte recouverte (15) se trouvant de préférence dans le plan de la surface annulaire (11) qui présente la rainure d'étanchéité (12).

4. Carter de guidage d'air selon une des revendications 1 à 3,
caractérisé en ce que la rainure d'étanchéité (12) est prévue dans la surface annulaire (11) de l'élément de raccordement (5, 10, 27) et la largeur radiale de la rainure d'étanchéité (12) est de préférence inférieure à l'épaisseur radiale du pied de la nervure d'étanchéité (22).

5. Carter de guidage d'air selon une des revendications 1 à 4,
caractérisé en ce que l'extension de la patte recouverte (15), mesurée dans la direction circonférentielle, est plus grande que l'extension de la patte recouvrante (25) mesurée dans la direction circonférentielle.

6. Carter de guidage d'air selon une des revendications 1 à 5,
caractérisé en ce que la hauteur (AH) de la patte recouverte (15) croît dans le sens de la rotation (47) de l'élément de raccordement (5, 10, 27), et la hauteur de réception de la patte recouvrante (25) est de préférence inférieure à la hauteur maximum (AH) de la patte recouverte (15), la profondeur radiale (RT) de la patte recouverte (15) croissant en particulier dans le sens de la rotation (47) et la profondeur réceptrice radiale de la patte recouvrante (25) étant de préférence inférieure à la profondeur radiale maximum (RT) de la patte recouverte.

7. Carter de guidage d'air selon une des revendications 1 à 6,
caractérisé en ce que la hauteur axiale (H) de la nervure d'étanchéité (22) est plus petite que la profondeur axiale (T) de la rainure d'étanchéité (12).

8. Carter de guidage d'air selon une des revendications 1 à 7,
caractérisé en ce que la nervure d'étanchéité (22) s'amincit légèrement dans la direction axiale, vers sa face frontale (17), qui est de préférence arrondie, selon un petit angle (18) d'environ 2°.

9. Carter de guidage d'air selon une des revendications 1 à 8,
caractérisé en ce que l'élément de raccordement (5, 10, 27) peut être enclenché sur le carter de guidage d'air (1) et présente de préférence un étrier d'enclenchement (30, 55) qui est radialement en porte-à-faux, auquel est associé, sur le carter de guidage d'air (1), un logement d'enclenchement (29, 54), les pattes (15, 25) se trouvant de préférence à l'intérieur du cercle de rotation de l'étrier d'enclenchement (30, 55).

10. Carter de guidage d'air selon une des revendications 1 à 9,
caractérisé en ce que l'élément de raccordement (5, 10, 27) est un couvercle de fermeture (5) prévu pour un collecteur d'air en volute (6) appartenant à un ventilateur (7) contenu dans le carter de guidage d'air (1), et le couvercle de fermeture (5) présente un logement d'encastrement (39) s'ouvrant sur le collecteur d'air en volute (6) pour recevoir le moteur (38) d'entraînement du ventilateur (7), et il est prévu de préférence un conduit d'air de refroidissement (42) qui débouche dans le logement d'encastrement (39) et qui peut être raccordé à une tubulure de prise d'air (44) du collecteur d'air en volute (6).

11. Carter de guidage d'air selon la revendication 10,
caractérisé en ce que les extrémités (43, 46) de la tubulure de prise d'air (44) et du conduit d'air de refroidissement (42) qui sont dirigées l'une vers l'autre sont reliées l'une à l'autre de façon très étanche à l'air dans la position de montage enclenchée du couvercle de fermeture (5), à l'aide d'un assemblage à rainure et languette.

12. Carter de guidage d'air selon la revendication 11,
caractérisé en ce que la face frontale de l'extrémité libre (43) du conduit d'air de refroidissement présente, à ses bords s'étendant dans le sens de rotation (47), ainsi qu'à son bord avant, dans le sens de rotation (47), une nervure d'étanchéité extérieure (49), en forme de cadre partiel, qui s'engage dans une rainure d'étanchéité correspondante (51) qui est formée sur la face frontale de l'extrémité libre (46) de la tubulure de prise d'air (44) et, en particulier, la face frontale de l'extrémité libre (43) du conduit d'air de refroidissement porte, au droit de son bord arrière, dans le sens de rotation (47), une languette de butée (50) qui déborde au-delà de la face frontale et est appliquée contre la paroi de la tubulure de prise d'air (44) dans une position de préférence enclenchée du couvercle de fermeture (5).

13. Carter de guidage d'air selon une des revendications 10 à 12,
caractérisé en ce que l'extrémité (43) du conduit d'air de refroidissement (42) qui est dirigée vers la tubulure de prise d'air (44) déborde radialement au-delà de la nervure d'étanchéité (49).
